(19)
Europäisches Patentamt
European Patent Office
Office européen des brevets

(11) EP 1 702 710 A1

(12) **EUROPEAN PATENT APPLICATION**
published in accordance with Art. 158(3) EPC

(43) Date of publication:
**20.09.2006 Bulletin 2006/38**

(21) Application number: **04807518.8**

(22) Date of filing: **15.12.2004**

(51) Int Cl.:
***B23P 15/26*** *(2006.01)* ***B26F 3/00*** *(2006.01)*

(86) International application number:
**PCT/JP2004/019161**

(87) International publication number:
**WO 2005/058539 (30.06.2005 Gazette 2005/26)**

(84) Designated Contracting States:
**DE FR**

(30) Priority: **19.12.2003 JP 2003422257**

(71) Applicant: **Valeo Thermal Systems Japan Corporation**
**Konan-machi, Osato-gun**
**Saitama 3600193 (JP)**

(72) Inventors:
- **MATSUZAKI, Y.,** **Ohsato-gun,** **Saitama 360-0193 (JP)**
- **KATO, S.,** **Ohsato-gun,** **Saitama 360-0193 (JP)**
- **AKAIKE, J.,** **Ohsato-gun,** **Saitama 360-0193 (JP)**
- **ITO, H.** **Ohsato-gun,** **Saitama 360-0193 (JP)**

(74) Representative: **Spilgies, Jan-Hendrik et al**
**Hoffmann Eitle**
**Patent- und Rechtsanwälte**
**Arabellastrasse 4**
**81925 München (DE)**

# (54) TUBE PRODUCING METHOD, HEAT EXCHANGING TUBE PRODUCED BY THE METHOD, AND HEAT EXCHANGER USING THE TUBE

(57) A method of producing a tube which has a tube body portion constituting an outer hull of flow passages, and flow passage dividers for dividing the flow passages, comprising a roll forming process to form the tube, a cutting process to cut the tube to a predetermined length after the roll forming process, and a brazing process to braze the tube contact portions of the flow passage dividers to the inner surface of the tube body portion after the cutting process. The cutting process forms a slit in the tube, and so as to concentrate a stress on the slit, thereby to cut the tube starting from the slit. The slit is formed in only the tube body portion between the tube body portion and the flow passage dividers or formed ranging from the tube body portion to the tube contact portions of the flow passage dividers.

*FIG.5*

4
4a
100
101
101
200
210
102
$d_{kerf}$
$d_{kerf}$
103
210
4a

EP 1 702 710 A1

## Description

TECHNICAL FIELD

The present invention relates to a method of producing a tube comprising a tube body portion constituting an outer hull of flow passages, and flow passage dividers for dividing the flow passages, a heat-exchange tube produced by this method, and a heat exchanger using the heat-exchange tube.

BACKGROUND ART

Generally, there is known a heat exchanger which is provided with heat-exchange tubes through which a medium flows, and performing heat exchange of the medium with heat conducted to the heat-exchange tubes. In recent years, it is demanded that the heat exchanger is highly sophisticated and made smaller and lighter, and the heat-exchange tube has come to have a more precise structure.
As the heat-exchange tube, a flat type which has a tube body portion constituting an outer hull of flow passages, and flow passage dividers for dividing the flow passages.
Known producing methods thereof include a method that forms by extruding a tube body portion and flow passage dividers into one body, and a method that forms by rolling a strip material while disposing flow passage dividers within the tube body portion and then brazing the tube contact portions of the flow passage dividers to the inner surface of the tube body portion.
In a case where the heat-exchange tube is formed by extruding, a composition of tube material is limited in view of the extrusion property of the material, but in a case where the heat-exchange tube is formed by rolling, the flexibility of selecting the composition increases, and a material having a high strength and high corrosion resistance can be obtained.
In addition, the roll forming of a thin material can provide a more precise and complex shape in comparison with the extrusion forming, and it is advantageous in making the heat-exchange tube precise and small. Where the heat-exchange tube is formed by roll forming, a material which has a sacrifice material previously clad on the surface which becomes an outside surface of the tube body portion can be used to further improve the corrosion resistance of the heat-exchange tube. Therefore, the heat-exchange tube can also be made thin.
Where the heat-exchange tube is formed by roll forming, as the flow passage divider, beads are provided by forming the material of the tube body portion, or corrugated inner fins formed of a material different from that of the tube body portion are disposed. And, the tops of the beads or those of the inner fins are brazed to the inner surface of the tube body portion.
Such a heat-exchange tube is cut to a prescribed length in its production process. A method of cutting the tube is also disclosed in the following Patent Documents 1 through 13.
At the time of cutting the tube, it is necessary to be careful such that deformation of the cut surface is minimized. In other words, it is necessary to cut the roll formed tube in such a manner that the tube body portion and the flow passage dividers are not deformed while suppressing the occurrence of burrs as little as possible. The tube contact portions of the flow passage dividers are generally brazed after cutting the tube.
However, in a case where the roll formed tube which was made precise and thin was cut, it was conspicuous that a ratio of burrs formed on the cut surface became large and the flow passage dividers were deformed because it could not stand the resistance in the cutting operation. In other words, the heat-exchange tube production site has a quite significant issue of how to efficiently cut the heat-exchange tube with the provision of high performance of the tube.
Patent Documents related to the present invention are as follows.


Patent Document 1: Japanese Patent No. 2608802

Patent Document 2: Japanese Patent Laid-Open Publication No. Hei 2-198798

Patent Document 3: Japanese Patent Laid-Open Publication No. Hei 2-262911

Patent Document 4: Japanese Patent Laid-Open Publication No. Hei 3-124337

Patent Document 5: Japanese Patent Laid-Open Publication No. Hei 6-63814

Patent Document 6: Japanese Patent Laid-Open Publication No. Hei 7-256509

Patent Document 7: Japanese Patent Laid-Open Publication No. Hei 9-70711

Patent Document 8: Japanese Patent Laid-Open Publication No. Hei 10-138035

Patent Document 9: Japanese Patent Laid-Open Publication No. Hei 11-320245

Patent Document 10: Japanese Patent Laid-Open Publication No. 2000-210812

Patent Document 11: Japanese Patent Laid-Open Publication No. 2002-233913

Patent Document 12: Japanese Patent Laid-Open Publication No. 2002-46015

Patent Document 13: Japanese Patent Laid-Open Publication No. 2003-11018

DISCLOSURE OF THE INVENTION

The present invention has been made in view of the above circumstances and has an object to obtain a better tube by rationalizing the cutting of a roll formed tube having flow passage divider.

The present invention also provides a heat exchanger having the good tubes.

The invention recited in claim 1 of the application is a method of producing a tube which has a tube body portion constituting an outer hull of flow passages and flow passage dividers for dividing the flow passages, comprising a roll forming process to form the tube, a cutting process to cut the tube to a predetermined length after the roll forming process, and a brazing process to braze the tube contact portions of the flow passage dividers to the inner surface of the tube body portion after the cutting process, wherein the cutting process forms a slit in the tube so as to concentrate a stress on the slit, thereby the tube cutting starts from the slit as a starting point; and the slit is formed in only the tube body portion between the tube body portion and the flow passage dividers.

The invention recited in claim 2 of the application is a method of producing a tube which has a tube body portion constituting an outer hull of flow passages, and flow passage dividers for dividing the flow passages, comprising a roll forming process to form the tube, a cutting process to cut the tube to a predetermined length after the roll forming process, and a brazing process to braze the tube contact portions of the flow passage dividers to the inner surface of the tube body portion after the cutting process, wherein the cutting process forms a slit in the tube so as to concentrate a stress on the slit, thereby the tube starts from the slit as a starting point; and the slit is formed ranging from the tube body portion to the tube contact portions of the flow passage divides.

The invention recited in claim 3 of the application is the method of producing a tube according to claim 1 or 2, wherein the slit is formed by moving a cutter blade in parallel to the surface of the tube.

The invention recited in claim 4 of the application is the method of producing a tube according to claim 1 or 2, wherein the slit is formed by moving a disk cutter in parallel to the surface of the tube.

The invention recited in claim 5 of the application is the method of producing a tube according to any of claims 1 through 4, wherein the tube is pulled in the longitudinal direction to concentrate a stress on the slit.

The invention recited in claim 6 is the method of producing a tube according to claim 5, wherein the roll forming process and the cutting process are performed while conveying a workpiece continuously, and the tube is pulled in a longitudinal direction with feed rollers disposed on the downstream side of a position, where the slit formation is performed, in a conveying direction and a conveying velocity provided by the feed rollers set to be faster than a conveying velocity in the roll forming process.

The invention recited in claim 7 of the application is the method of producing a tube according to claim 5, wherein the roll forming process and the cutting process are performed while conveying a workpiece continuously, and the tube is pulled in a longitudinal direction by holding the upstream and downstream sides of a portion, where the slit is formed, in a conveying direction by means of a pair of clamps, and expanding a space between the pair of clamps relatively.

The invention recited in claim 8 of the application is the method of producing a tube according to any of claims 1 through 4, wherein a stress is concentrated on the slit by applying a load to the tube in a direction different from its longitudinal direction.

The invention recited in claim 9 of the application is the method of producing a tube according to claim 8, wherein feed rollers are disposed offset with respect to the longitudinal direction of the tube; and the tube passes through the feed rollers after the slit is formed, thereby a load is applied in a direction different from the longitudinal direction of the tube.

The invention recited in claim 10 of the application is the method of producing a tube according to claim 8, wherein the tube is oscillated, thereby a load is applied in a direction different from the longitudinal direction of the tube.

The invention recited in claim 11 of the application is the method of producing a tube according to any of claims 1 through 10, wherein the tube is a flat type and has a thickness of 0.8 to 1.7 mm.

The invention recited in claim 12 of the application is the method of producing a tube according any of claims 1 through 11, wherein a material of the tube body portion has a thickness of 0.15 to 0.25 mm.

The invention recited in claim 13 of the application is the method of producing a tube according to any of claims 1 through 12, wherein the flow passage dividers are beads formed by forming a material of the tube body portion, and the tops of the beads are brazed to the inner surface of the tube body portion.

The invention recited in claim 14 of the application is the method of producing a tube according to any of claims 1 through 12, wherein the flow passage dividers are provided by inner fins which are formed of a member different from that of the tube body portion.

The invention recited in claim 15 of the application is the method of producing a tube according to claim 14, wherein the inner fins are corrugate type, and the tops of the inner fins are brazed to the inner surface of the tube body portion.

The invention recited in claim 16 of the application is the method of producing a tube according to claim 15, wherein the inner fin has a width of 0.3 to 1.4 mm in an amplitude direction.

The invention recited in claim 17 of the application is the method of producing a tube according to claim 15 or 16, wherein a material of the inner fins has a thickness of 0.05 to 0.10 mm.

The invention recited in claim 18 of the application is the method of producing a tube according to any of claims 15 through 17, wherein the tops of the inner fin have a pitch of 0.6 to 2.0 mm.

The invention recited in claim 19 of the application is a heat-exchange tube, which is produced by the production method according to any of claims 1 through 18.

The invention recited in claim 20 of the application is a heat exchanger comprising the heat-exchange tubes as recited in claim 19.

BRIEF DESCRIPTION OF THE DRAWINGS

Fig. 1 is an explanatory diagram showing the front of a heat exchanger according to an embodiment of the invention (First embodiment).

Fig. 2 is an explanatory diagram showing a longitudinal section of a heat-exchange tube according to the embodiment of the invention (First embodiment).

Fig. 3 is an explanatory diagram showing a roll forming process and cutting process according to the embodiment of the invention (First embodiment).

Fig. 4 is an explanatory diagram showing a brazing process according to the embodiment of the invention (First embodiment).

Fig. 5 is an explanatory diagram showing a slit forming method according to the embodiment of the invention (First embodiment).

Fig. 6 is an explanatory diagram showing a slit forming method according to the embodiment of the invention (First embodiment).

Fig. 7 is an explanatory diagram showing a slit forming method according to the embodiment of the invention (First embodiment).

Fig. 8 is an explanatory diagram showing a slit forming method according to the embodiment of the invention (First embodiment).

Fig. 9 is an explanatory diagram showing a longitudinal section of a heat-exchange tube according to an embodiment of the invention (Second embodiment).

Fig. 10 is an explanatory diagram showing a slit forming method according to the embodiment of the invention (Second embodiment).

Fig. 11 is an explanatory diagram showing a slit forming method according to the embodiment of the invention (Second embodiment).

Fig. 12 is an explanatory diagram showing a slit forming method according to the embodiment of the invention (Second embodiment).

Fig. 13 is an explanatory diagram showing a slit forming method according to the embodiment of the invention (Second embodiment).

Fig. 14 is an explanatory diagram showing a longitudinal section of a heat-exchange tube according to the embodiment of the invention (Second embodiment).

Fig. 15 is an explanatory diagram showing a cutting process according to an embodiment of the invention (Third embodiment).

Fig. 16 is an explanatory diagram showing a cutting process according to an embodiment of the invention (Fourth embodiment).

Fig. 17 is an explanatory diagram showing a cutting process according to an embodiment of the invention (Fifth embodiment).

BEST MODE FOR CARRYING OUT THE INVENTION

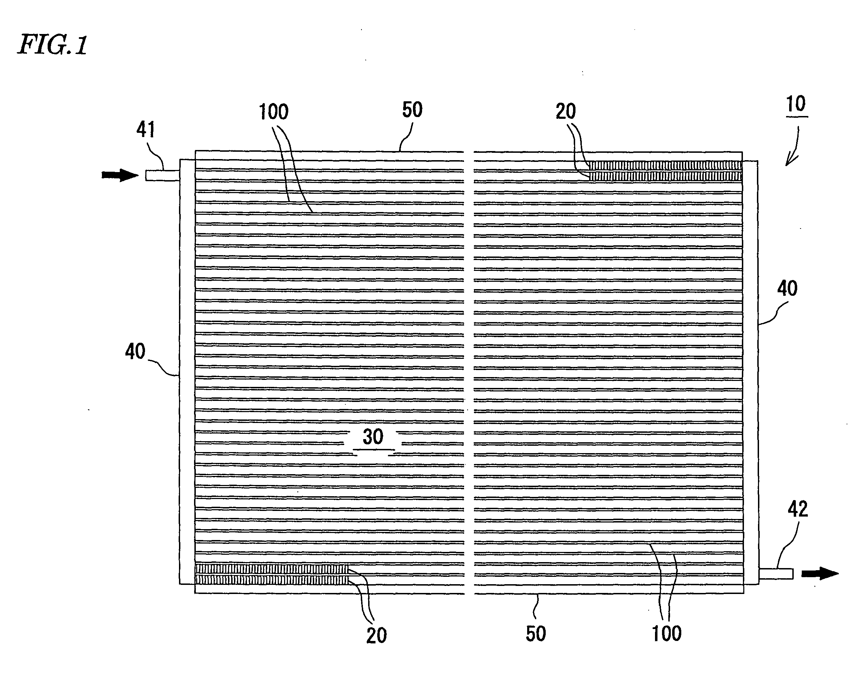

A first embodiment of the invention will be described with reference to Fig. 1 through Fig. 8. A heat exchanger 10 shown in Fig. 1 is a radiator of a refrigeration cycle for air-conditioning of a car interior mounted on an automobile. The heat exchanger 10 has a core 30 which is formed by alternately stacking heat exchange tubes 100 and radiation fins 20 and a pair of tanks 40 which are connected to communicate with either ends in the longitudinal directions of the individual heat exchange tubes 100. A reinforcing member 50 is disposed on the top and bottom ends of the core 30, and the both ends of the reinforcing members 50 in the longitudinal direction are supported by the tanks 40. And, it is so structured that an inlet 41 and an outlet 42 for a medium (namely, a refrigerant circulating through the refrigeration cycle) are disposed at required portions of the tanks 40, and the medium flows in through the inlet 41 flows through the heat exchange tubes 100 while performing heat exchange with heat conducted to the core 30 and flows out through the outlet 42.

The heat exchange tubes 100, the fins 20, the tanks 40, the inlet 41, the outlet 42 and the side plates 50 which are component members of the heat exchanger 10 are made of aluminum or aluminum alloy members and assembled into one body. And, the assembly is brazed as one body in a furnace. To perform the brazing in the furnace, a brazing material and flux are disposed at the required portions of the individual members.

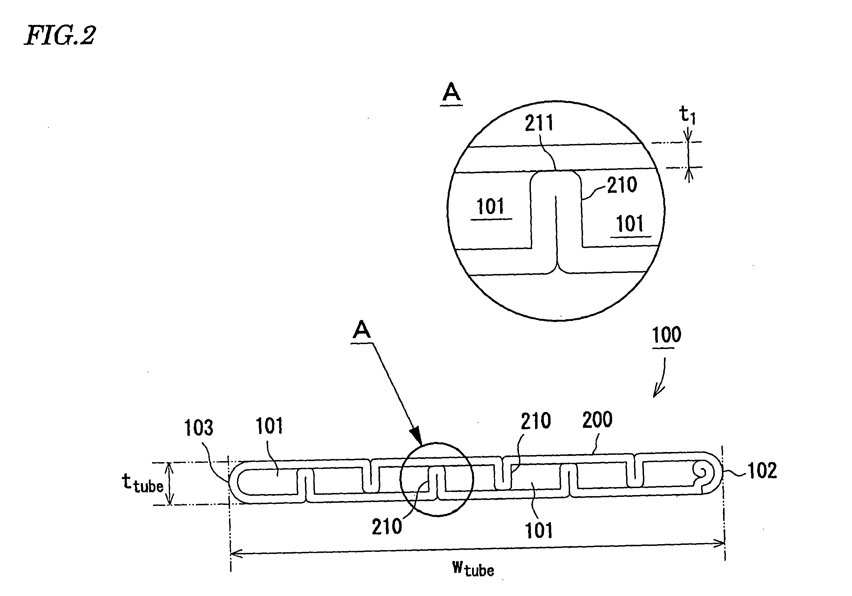

The heat exchange tube 100 of this embodiment shown in Fig. 2 is a flat type having a tube body portion 200 which constitute the outer hull of flow passages 101 and flow passage dividers 210 for dividing the flow passages 101. The heat exchange tube 100 has thickness $t_{tube}$ of 0.8 to 1.7 mm and width $W_{tube}$ of 8 to 25 mm. And, the tube body portion 200 is formed by rolling an aluminum or aluminum alloy strip material, and the material of the tube body portion 200 has thickness $t_1$ of 0.15 to 0.25 mm. Both ends of the material in its width direction are mutually engaged and brazed at an end 102 of the heat exchange tube 100 in its width direction such that they are not separated. Other end 103 of the heat exchange tube 100 in its breadth direction is formed by bending approximately the center of the material. Besides, the flow passage dividers 210 shown in Fig. 2 are beads 210 formed of the material of the tube body portion 200. Tops 211 of the beads 210, which are tube contact portions of the flow passage dividers, are brazed to the inner surface of the tube body portion 200.

A brazing material required for brazing of the heat exchange tubes 100 is previously clad to the inner surface of the material of the tube body portion 200. Otherwise, it may be structured so that the brazing material, which is melted from other members constituting the heat exchanger 10, is drawn into required portions by capillary action. On the outer surface of the material of the tube body portion 200, an Al-Zn alloy layer may be disposed as the sacrifice layer to improve the corrosion resistance of the heat exchange tube 100.

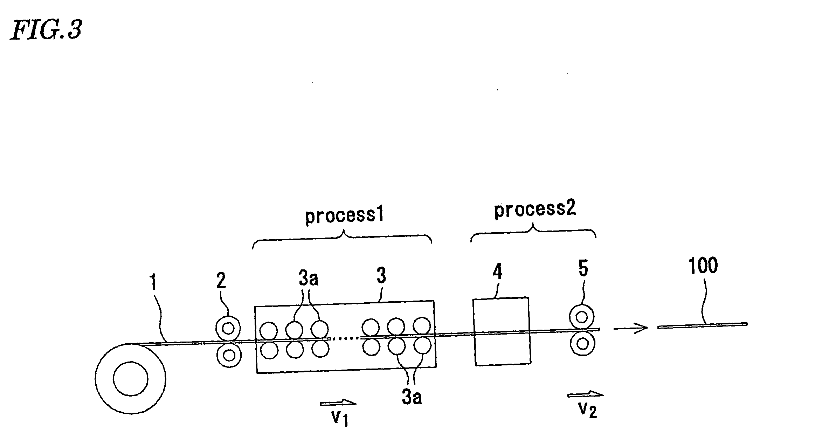

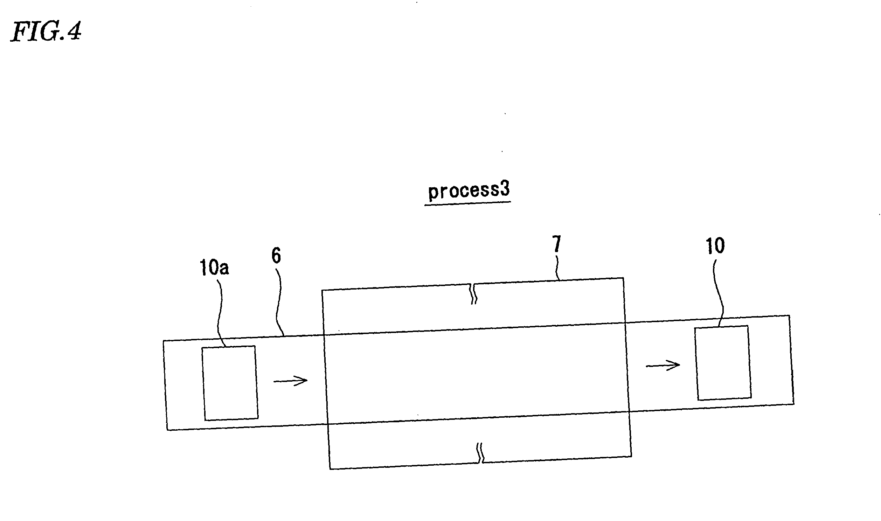

A production method of the heat exchange tube 100 will be described below. As shown in Fig. 3 and Fig. 4, this production method includes a roll forming process (process 1) for forming the heat exchange tube 100, a cutting process (process 2) for cutting the tube 100 to a predetermined length after the roll forming process, and a brazing process (process 3) for brazing the tops 211 of the beads 210, which are tube contact portions of the flow passage dividers 210, to the inner surface of the tube body portion 200 after the cutting process, and particularly the roll forming process and the cutting process are performed by continuously conveying a workpiece.

The roll forming process (process 1) is performed by supplying a material 1 of the strip shaped tube body portion 200 from first feed rollers 2 to a roll forming machine 3. The roll forming machine 3 has a plurality of forming rollers 3a disposed continuously. The material 1 is plastically deformed gradually while being passed through the individual forming rollers 3a and formed into the heat exchange tube 100 having a predetermined shape.

In the cutting process (process 2), a slit is formed in a required portion of the heat exchange tube 100 (more specifically, is an intermediate formingmember of the heat exchange tube 100) formed by the roll forming process by a cutter device 4, and a stress is concentrated on the slit to cut the heat exchange tube 100 from the slit as a starting point. The cutter device 4 is a flying type that moves a cutter in compliance with a conveying speed of the heat exchange tube 100. The cutter device 4 and the slit will be described later in detail.

This embodiment is structured to concentrate a stress on the slit by pulling the heat exchange tube 100 in the longitudinal direction. Specifically, it is structured to pull the heat exchange tube 100 in the longitudinal direction by disposing second feed rollers 5 in a later stage of the cutter device, namely at a downstream side in the conveying direction than the portion where the slit is formed, and setting a conveying velocity $v_2$ of the second feed rollers 5 to be faster than a conveying velocity $v_1$ in the roll forming process.

In the brazing process (process 3), the heat exchange tubes 100 and other members constituting the heat exchanger 10 are assembled by using a jig, and an assembly 10a is placed on a conveyer 6 and conveyed into a furnace 7. The assembly 10a is heated in the furnace 7 to braze the required portions to provide the heat exchanger 10. Namely, the tops 211 of the beads and both ends of the material in the width direction are brazed.

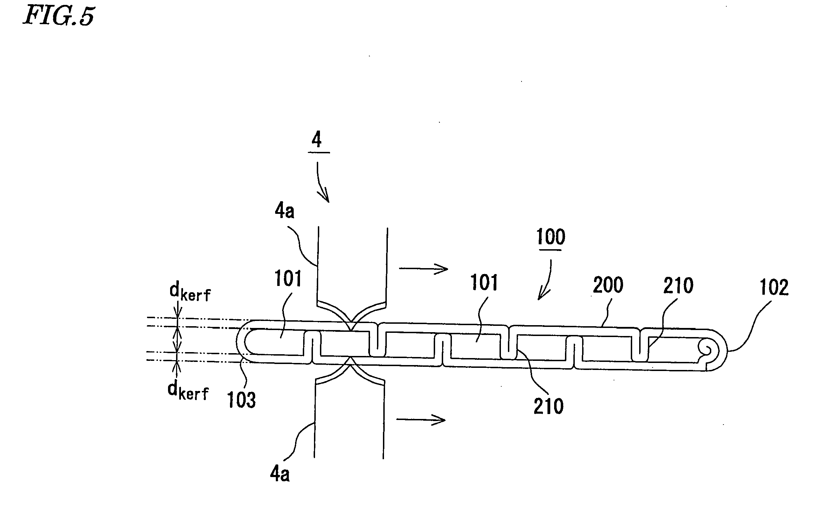

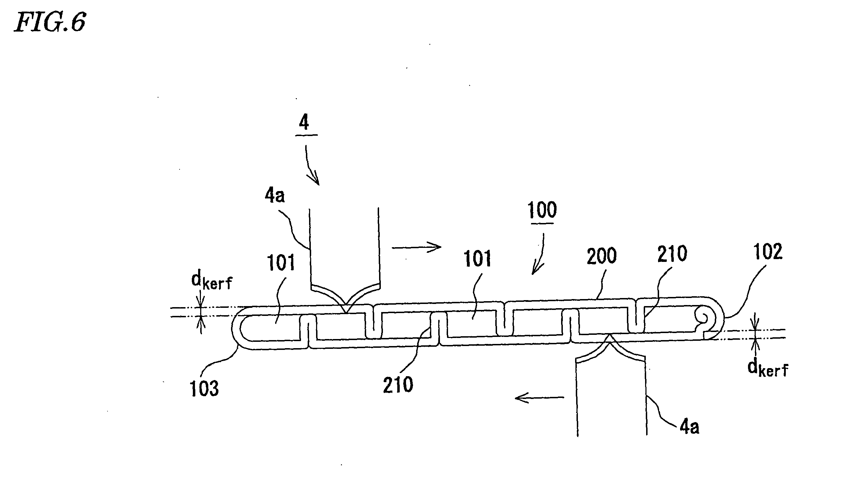

Then, the cutter device 4 and the slit related to the cutting process (process 2) will be described. The cutter device 4 of this embodiment is provided with a pair of cutters 4a which are opposed to each other as shown in Fig. 5 or Fig. 6 to form slits by moving the blades of the individual cutters 4a in parallel to both surfaces of the heat exchange tube 100 in a flattened direction. It is structured to fix the heat exchange tube 100 with a cramp when the slits are formed. The cutter device 4 shown in Fig. 5 has the pair of cutters 4a moved in the same direction, and the cutter device 4 shown in Fig. 6 has the pair of cutters 4a moved in the opposed directions. The direction of moving the cutters 4a is determined appropriately considering a balance and the like of a load applied to the heat exchange tube 100.

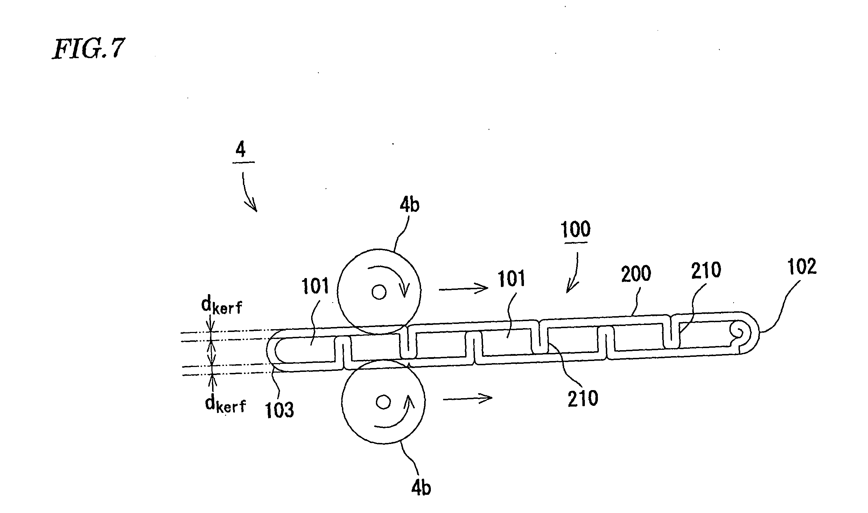

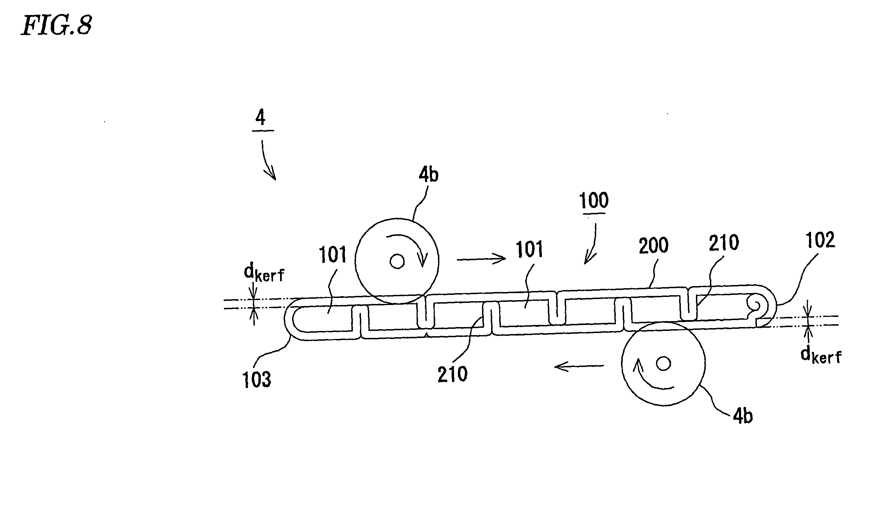

Otherwise, the cutter device 4 may be provided with a pair of mutually opposed disk cutters 4b as shown in Fig. 7 or Fig. 8 to make a slit in both surfaces of the heat exchange tube 100 in a flattened direction by moving the individual disk cutters 4b in parallel to each other. The cutter device 4 shown in Fig. 7 moves the pair of disk cutters 4b in the same direction, and the cutter device 4 shown in Fig. 8 moves the pair of disk cutters 4b in mutually opposed directions. The direction of moving the disk cutters 4b is determined appropriately considering a balance or the like of a load applied to the heat exchange tube 100.

It is structured in this embodiment that the slits are formed in only the tube body portion 200 between the tube body portion 200 and the beads 210 or formed ranging from the tube body portion 200 to the tops 211 of the beads 210.

Specifically, a relationship between a slit depth $d_{kerf}$ and thickness $t_1$ of the material of the tube body portion 200 is:

$$(1/2) \times t_1 \leqq d_{kerf} \leqq 2 \times t_1,$$

more preferably

$$(3/4) \times t_1 \leqq d_{kerf} \leqq (3/2) \times t_1,$$

and most preferably $d_{kerf} \fallingdotseq t_1$.

The heat exchange tube 100 of this embodiment was designed pursuing a better performance on the basis of the existing production technology. This heat exchange tube 100 is formed to be very precise and thin, and when it is cut, it is quite important to prevent the occurrence of burrs on the cut surface and the deformation of the tube body portion 200 and the beads 210 in order to secure the performance of the heat exchange tube 100. The present inventors have devised a structure in that a slit to start cutting is formed in only the tube body portion 200 between the tube body portion 200 and the beads 210 considering the considerable deformation or the like of the beads 210 when the heat exchange tube 100 is cut before the tops 211 of the beads 210 are brazed, or a slit to start cutting is formed from the tube body portion 200 to the tops 211 of the beads 210, and has confirmed by experiments that the above structure is very effective.

The above equations generally show a relationship between good $d_{kerf}$ and $t_1$ obtained by the experiments. It is determined whether or not the slit is formed to reach the tops 211 of the beads 210, depending on a case considering a shape of the beads 210 and a stress or the like at the time of forming the slit. In other words, it should be noted that when the slit is formed to reach the tops 211 of the beads 210, a force required for cutting decreases considerably, but a possibility of forming burrs and causing deformation of the beads increases.

According to the above-described production method of the embodiment, cutting of the roll formed tube having the flow passage dividers can be rationalized without fail, and a better heat-exchange tube can be obtained. It should be noted that the structure of this embodiment can be modified in design appropriately without deviating from the technical scope recited in the claims and it is not limited to the illustrated and described structures.

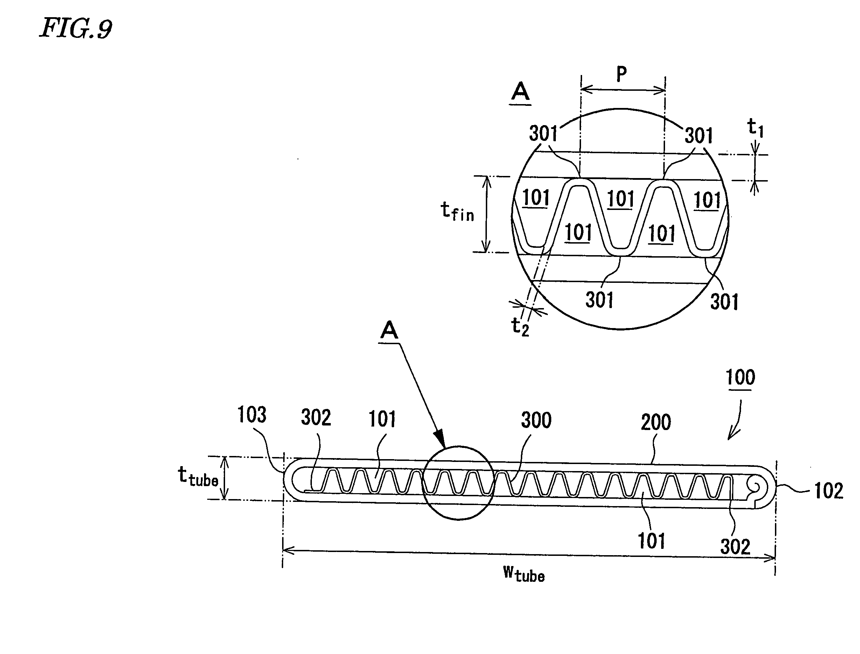

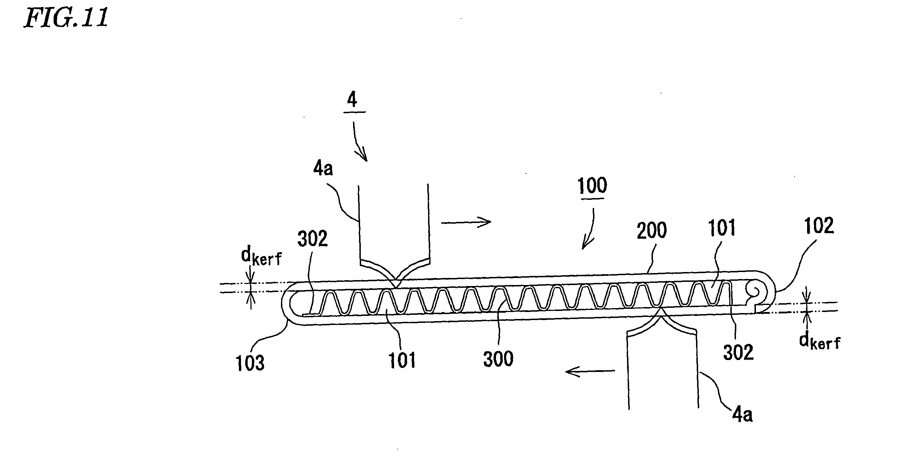

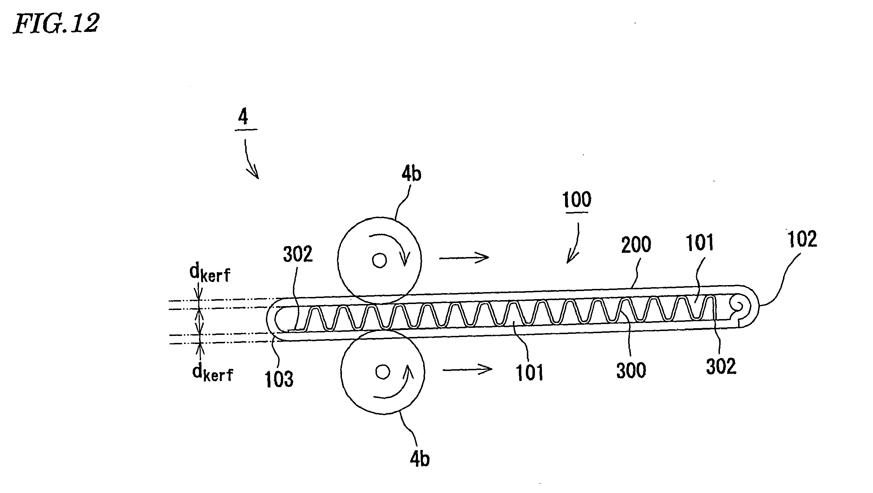

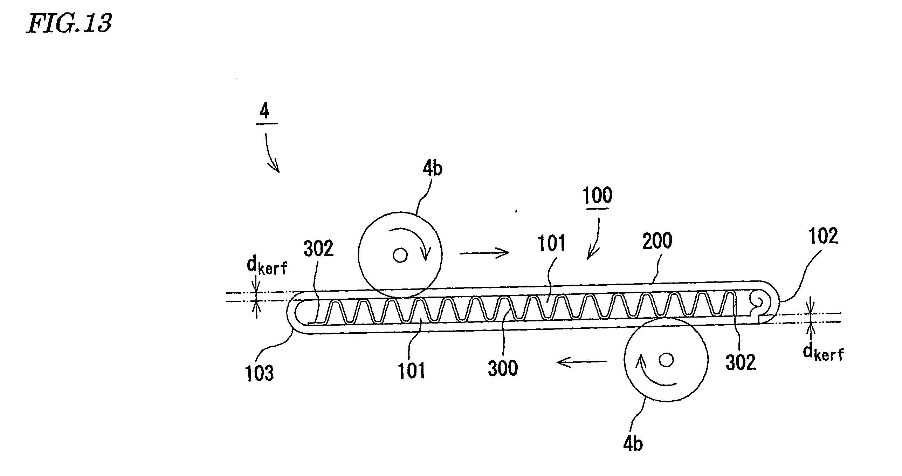

A second embodiment of the invention will be described with reference to Fig. 9 through Fig. 14.

The heat exchange tube 100 shown in Fig. 9 has inner fins 300 formed of a member different from that of the tube body portion 200 as flow passage dividers. Other basic structure is same as in the previous described embodiment.

The inner fins 300 of this embodiment are a corrugated type and which are formed by roll forming an aluminum or aluminum alloy strip material. The inner fin 300 has width $t_{fin}$ of 0.3 to 1.4 mm in an amplitude direction, the material of the inner fin has a thickness $t_2$ of 0.05 to 0.10 mm, and the tops of the inner fins have pitch P of 0.6 to 2.0 mm. The inner fins 300 are inserted into the material of the tube body portion 200 in an appropriate stage of the roll forming process (process 1) and disposed within the tube body portion 200. One end 102 of the heat exchange tube 100 in its width direction is engaged so that separation does not occur after the inner fin 300 is inserted. In a brazing process (process 3), tops 301 of the inner fins 300 and ends 302 in a width direction are brazed to the inner surface of the tube body portion 200. In this embodiment, a brazing material used for brazing the tops 301 of the inner fins 300 and the ends 302 in the width direction to the inner surface of the tube body portion 200 is clad to the material of the inner fins 300.

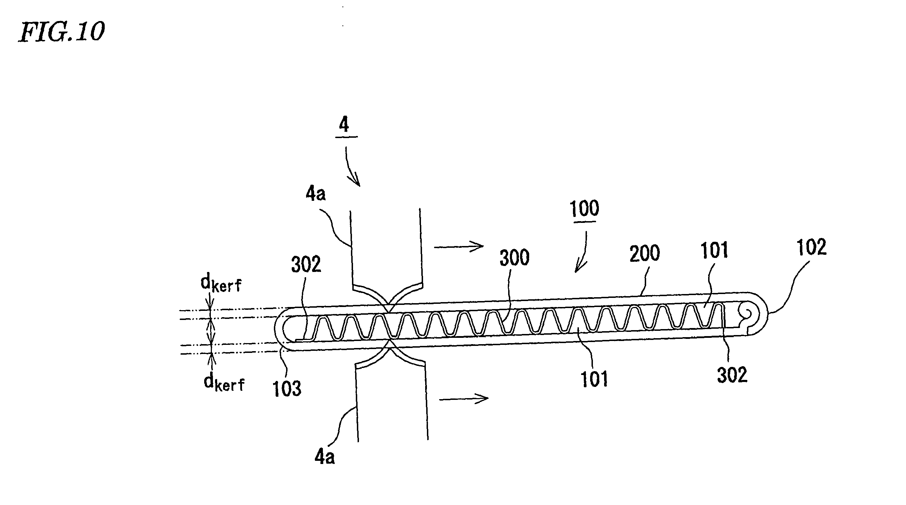

In a cutting process (process 2), the same cutter device 4 as that used in the first embodiment is used to form a slit as shown in Fig. 10 through Fig. 13.

A relationship between slit depth $d_{kerf}$, thickness $t_1$ of the material of the tube body portion 200 and thickness $t_2$ of the material of the inner fin 300 is:

$$(1/2) \times t_1 \leqq d_{kerf} \leqq t_1 + t_2,$$

more preferably

$$(3/4) \times t_1 \leqq d_{kerf} \leqq t_1 + (1/2) \times t_2,$$

and most preferably $d_{kerf} \fallingdotseq t_1$.

The heat exchange tube 100 of this embodiment was also designed pursuing a better performance on the basis of the existing production technology. Considering the facts that the inner fins 300 within the tube body portion 200 are deformed and displaced conspicuously in a case where the heat exchange tube 100 is cut before the tops 301 and the ends 302 in the width direction of the inner fins 300 are brazed, the inventors of the present invention has devised a structure in that a slit which becomes a starting point for cutting is formed in only the tube body portion 200 between the tube body portion 200 and the inner fins 300 or a slit, which becomes a starting point for cutting, is formed to range from the tube body portion 200 to the tops 301 of the inner fins 300, and confirmed by experiments that the above structure is very effective.

The above equations generally show a relationship between good $d_{kerf}$ and $t_1$ obtained by the experiments. It is judged whether or not the slit is formed to reach the tops 301 1 of the inner fins 300 depending on a case considering a shape of the inner fins 300 and a stress or the like at the time of forming the slit. In other words, it should be noted that the forming the slit to reach the tops 301 of the inner fins 300 considerably decreases a force required for cutting but increases a possibility of formation of burrs, deformation and displacement. The inner fins 300 are particularly thin and brittle in comparison with the tube body portion 200, so that the fins can be separated together with the tube body portion 200 without forming a slit.

In this embodiment, the inner fins 300 have a skin material formed of A4343 (Japanese Industrial Standard: JIS) clad as a brazing material clad to a core material formed of A3003 (JIS). The strength of the core material can be improved by adding Cu to A3003. A ratio of the skin material is desirably 5 to 10% of the whole. Besides, the inner fins 300 are desirably cured by cold working. This inner fins 300 have a tensile strength of 120 to 200 N/mm$^2$. The slit depth $d_{kerf}$ is desirably a level such that a slight mark remains on the tops 301 of the inner fins 300.

According to the production method of the embodiment described above, cutting of the roll formed tube having the flow passage dividers can be rationalized securely, and a better heat-exchange tube can be obtained.

It should be noted that the structure of this embodiment can be modified in design appropriately without deviating from the technical scope described in the claims and it is not limited to the illustrated and described structures.

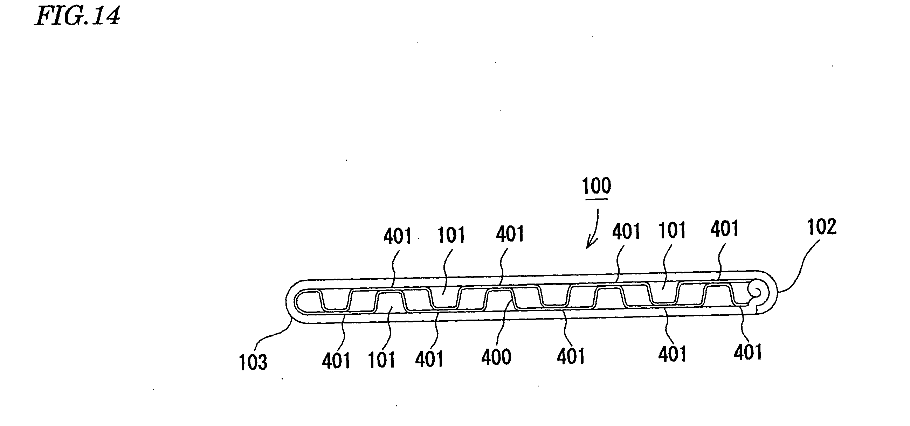

As shown in Fig. 14, for example, inner fins 400 different from the corrugated type can also be used as the flow passage dividers. The inner fins 400 have tube contact portions 401, which are provided in a predetermined shape, and brazed to the inner surface of the tube body portion 200. In other words, the heat exchange tube 100 shown in Fig. 14 is also cut by forming a slit in only the tube body portion 200 between the tube body portion 200 and the inner fins 400 or by forming a slit ranging from the tube body portion 200 to the brazed tube contact portions 401 of the inner fins 400 and further a stress is concentrated on the slit, thereby to out the tube from the slit as a starting point.

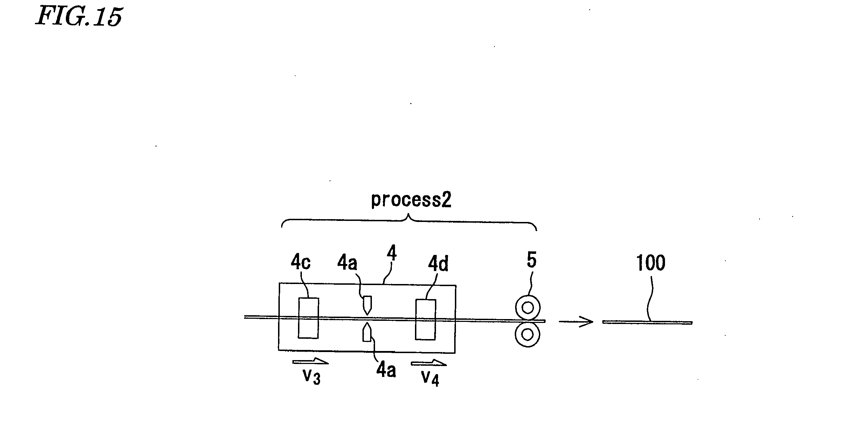

A third embodiment of the invention will be described with reference to Fig. 15.

According to a cutting process (process 2) of this embodiment, it is structured such that the heat exchange tube 100 is pulled in a longitudinal direction by holding upstream and downstream sides of a slit formed portion in a conveying direction by a pair of clamps 4c, 4d and a space between the pair of clamps 4c, 4d is widened relatively. The cutter device 4 of this embodiment has the pair of clamps 4c, 4d which are moved together with the cutters 4a or the disk cutters 4b in association with a conveying velocity of the heat exchange tube 100, and the slit is formed in a state where the heat exchange tube 100 fixed by the individual clamps 4c, 4d.

After the slit is formed, the heat exchange tube 100 is pulled in the longitudinal direction with the space between the pair of clamps 4c, 4d increased with the heat exchange tube 100 being held by them. In other words, it is so set that after the formation of the slit, a conveying velocity $v_4$ of the heat exchange tube 100 by the clamp 4d on the downstream side in the conveying direction becomes faster than a conveying velocity $v_3$ of the heat exchange tube 100 by the clamp 4c on the upstream side in the conveying direction. The other basic structure is same as in the previously described embodiment.

As described above, it is also possible to pull the heat-exchange tube in the longitudinal direction by the pair of clamps.

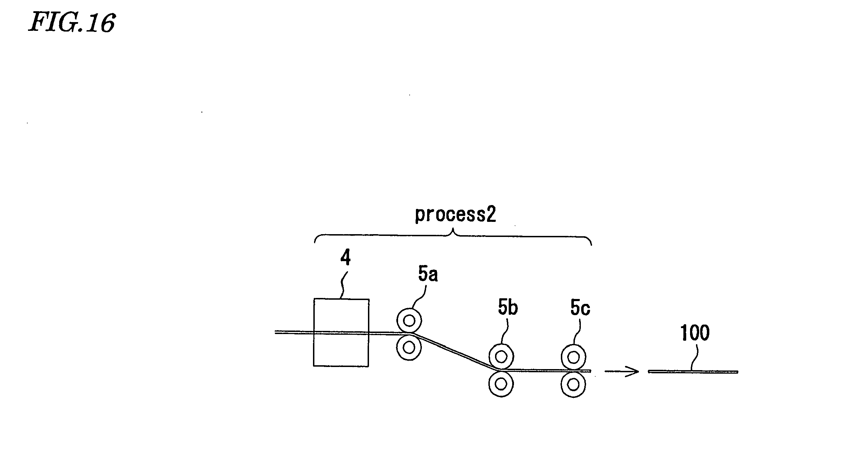

A fourth embodiment of the invention will be described with reference to Fig. 16.

A cutting process (process 2) of this embodiment is structured so that a stress is concentrated on a slit by applying a load in a direction different from a longitudinal direction of the heat exchange tube 100 in which the slit is formed by the cutter device 4. Specifically, second feed rollers 5a, 5b, 5c which are disposed offset to the longitudinal direction of the heat exchange tube 100, and the heat exchange tube 100 passes through the predetermined second feed rollers 5a, 5b after the slit is formed by the cutter device 4, and a load is applied in a direction different from the longitudinal direction of the heat exchange tube 100. In other words, the heat exchange tube 100 is separated while or after being passed through the prescribed second feed rollers 5a, 5b. The other basic structure is same as in the previously described embodiment.

As described above, it is possible to concentrate the stress on the slit by applying a load to the heat-exchange tube in a direction different from its longitudinal direction. Farther, It can be structured so that a load is applied to the heat-exchange tube when it passes through the feed rollers which are disposed offset with respect to the longitudinal direction.

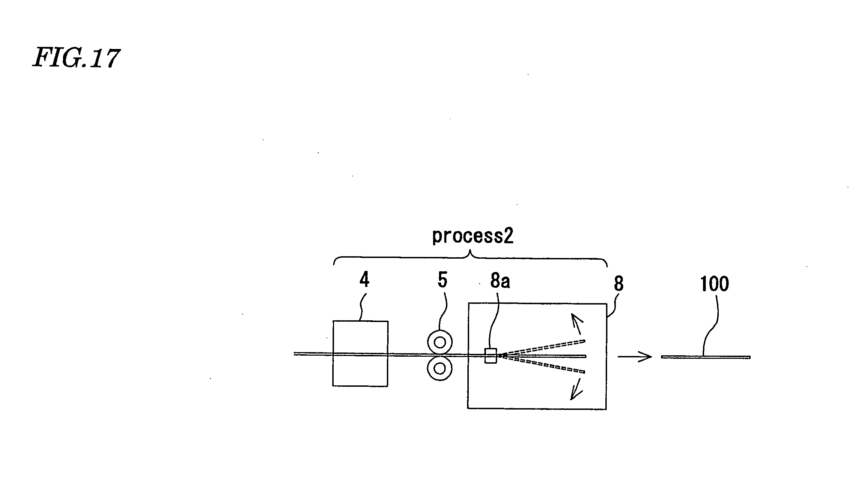

Then, a fifth embodiment of the invention will be described with reference to Fig. 17.

A cutting process (process 2) of this embodiment is structured so that a stress is concentrated on a slit by applying a load in a direction different from a longitudinal direction of the heat exchange tube 100 in which the slit is formed by the cutter device 4.

Specifically, it is structured such that the heat exchange tube 100 is oscillated so that a load is applied in a direction different from the longitudinal direction of the heat-exchange tube. An oscillating device 8 for oscillating the heat exchange tube 100 is disposed in a subsequent stage of the cutter device 4 and the second feed rollers 5, and the oscillating device 8 is structured to move the heat exchange tube 100 horizontally or vertically on the downstream side in the conveying direction while supporting the upstream side in the conveying direction of the portion, in which the slit is formed, by support means 8a. The other basic structure is same as in the previously described embodiment.

As described above, the heat-exchange tube can also be structured to be applied with a load by oscillating thereof.

## INDUSTRIAL APPLICABILITY

The production method of a tube according to the invention can be used suitably as a method of producing the heat-exchange tube. The heat-exchange tube is used to constitute a heat exchanger of a radiator and an evaporator of a refrigeration cycle, a radiator and a heater core of an automobile, and the like.

## Claims

**1.** A method of producing a tube which has a tube body portion constituting an outer hull of flow passages, and flow passage dividers for dividing the flow passages, comprising:

a roll forming process to form the tube, a cutting process to cut the tube to a predetermined length after the roll forming process, and a brazing process to braze the tube contact portions of the flow passage dividers to the inner surface of the tube body portion after the cutting process, wherein:
the cutting process forms a slit in the tube so as to concentrate a stress on the slit, thereby the tube cutting starts from the slit as a starting point; and
the slit is formed in only the tube body portion between the tube body portion and the flow passage dividers.

**2.** A method of producing a tube which has a tube body portion constituting an outer hull of flow passages and flow passage dividers for dividing the flow passages, comprising:

a roll forming process to form the tube, a cutting process to cut the tube to a predetermined length after the roll forming process, and a brazing process to braze the tube contact portions of the flow passage dividers to the inner surface of the tube body portion after the cutting process, wherein:
the cutting process forms a slit in the tube so as to concentrate a stress on the slit, thereby cut the tube cutting starts from the slit as a starting point; and
the slit is formed ranging from the tube body portion to the tube contact portions of the flow passage dividers.

3. The method of producing a tube according to claim 1 or 2, wherein the slit is formed by moving a cutter blade in parallel to the surface of the tube.

4. The method of producing a tube according to claim 1 or 2, wherein the slit is formed by moving a disk cutter in parallel to the surface of the tube.

5. The method of producing a tube according to any of claims 1 through 4, wherein the tube is pulled in the longitudinal direction to concentrate a stress on the slit.

6. The method of producing a tube according to claim 5, wherein:

   the roll forming process and the cutting process are performed while conveying a workpiece continuously, and the tube is pulled in a longitudinal direction with feed rollers disposed on the downstream side of a position, where the slit formation is performed, in a conveying direction and a conveying velocity provided by the feed rollers set to be faster than a conveying velocity in the roll forming process.

7. The method of producing a tube according to claim 5, wherein:

   the roll forming process and the cutting process are performed while conveying a workpiece continuously, and the tube is pulled in a longitudinal direction by holding the upstream and downstream sides of a portion, where the slit is formed, in a conveying direction by means of a pair of clamps and expanding a space between the pair of clamps relatively.

8. The method of producing a tube according to any of claims 1 through 4, wherein a stress is concentrated on the slit by applying a load to the tube in a direction different from its longitudinal direction.

9. The method of producing a tube according to claim 8, wherein:

   feed rollers are disposed offset with respect to the longitudinal direction of the tube; and
   the tube is passes through the feed rollers after the slit is formed, thereby a load is applied in a direction different from the longitudinal direction of the tube.

10. The method of producing a tube according to claim 8, wherein the tube is oscillated, thereby a load is applied in a direction different from the longitudinal direction of the tube.

11. The method of producing a tube according to any of claims 1 through 10, wherein the tube is a flat type and has a thickness of 0.8 to 1.7 mm.

12. The method of producing a tube according any of claims 1 through 11, wherein a material of the tube body portion has a thickness of 0.15 to 0.25 mm.

13. The method of producing a tube according to any of claims 1 through 12, wherein:

   the flow passage dividers are beads formed by forming a material of the tube body portion, and
   the tops of the beads are brazed to the inner surface of the tube body portion.

14. The method of producing a tube according to any of claims 1 through 12, wherein the flow passage dividers are provided by inner fins which are formed of a member different from that of the tube body portion.

15. The method of producing a tube according to claim 14, wherein:

   the inner fins are a corrugate type, and
   the tops of the inner fins are brazed to the inner surface of the tube body portion.

16. The method of producing a tube according to claim 15, wherein the inner fin has a width of 0.3 to 1.4 mm in an amplitude direction.

17. The method of producing a tube according to claim 15 or 16, wherein a material of the inner fins has a thickness of 0.05 to 0.10 mm.

**18.** The method of producing a tube according to any of claims 15 through 17, wherein the tops of the inner fin have a pitch of 0.6 to 2.0 mm.

**19.** A heat-exchange tube, which is produced by the production method according to any of claims 1 through 18.

**20.** A heat exchanger comprising the heat-exchange tubes as recited in claim 19.

10
40
42
100
100
20
50
50
30
20
100
41
40

FIG.1

A
t1
211
210
101
101
100
102
200
210
101
210
A
101
103
$W_{tube}$
$t_{tube}$


FIG.2

100
process2
5
4
$V_2$
process1
3
3a
3a
$V_1$
2
1

FIG.3

process3
10
7
6
10a

FIG. 4

102
210
200
100
210
101
4
4a
101
103
4a
dkerf
dkerf

FIG.5

102
$d_{kerf}$
210
4a
200
100
101
210
4
4a
101
$d_{kerf}$
103

*FIG.6*

102
210
200
100
210
101
4b
4b
101
103
4
$d_{kerf}$
$d_{kerf}$

*FIG.7*

102
$d_{kerf}$
4b
210
200
100
101
210
4b
101
103
$d_{kerf}$
4


*FIG.8*

A
P
301
301
301
301
101
101
101
101
101
101
t1
t2
tfin
100
102
302
200
101
300
A
101
302
103
ttube
Wtube

*FIG.9*

102
302
101
200
100
101
300
4
4a
4a
302
103
$d_{kerf}$
$d_{kerf}$

*FIG.10*

102
dkerf
101
302
4a
200
100
300
101
4
4a
302
dkerf
103

FIG.11

102
101
302
200
300
100
101
4b
4b
302
103
4
d kerf
d kerf

FIG.12

102
d kerf
302
200
100
101
300
4b
101
4b
302
4
d kerf
103

*FIG.13*

102
401
401
101
401
401
100
401
401
400
101
401
401
101
401
103

*FIG.14*

*FIG.15*

process2
4c
4a
4
4a
4d
5
100
$V_3$
$V_4$

process2
4
5a
5b
5c
100

FIG.16

100
8
8a
process2
5
4

FIG.17

**INTERNATIONAL SEARCH REPORT**

International application No.
PCT/JP2004/019161

A. CLASSIFICATION OF SUBJECT MATTER
Int.Cl[7] B23P15/26, B26F3/00

According to International Patent Classification (IPC) or to both national classification and IPC

B. FIELDS SEARCHED

Minimum documentation searched (classification system followed by classification symbols)
Int.Cl[7] B21D53/00-53/08, B23D21/00, B23P15/26, B26F3/00-3/04, F28F1/00-1/02

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 8-52613 A (Modine Manufacturing Co.), 27 February, 1996 (27.02.96), Full text; all drawings & US 5653022 A1 & EP 688622 A1 & CA 2151624 A1 | 1-20 |
| Y | JP 5-177286 A (Showa Aluminum Corp., Mori Mashinari Kabushiki Kaisha), 20 July, 1993 (20.07.93), Full text; all drawings (Family: none) | 1-20 |
| Y | JP 2-198798 A (Sanden Corp.), 07 August, 1990 (07.08.90), Full text; all drawings (Family: none) | 3-20 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 March, 2005 (09.03.05) | 29 March, 2005 (29.03.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.
PCT/JP2004/019161

C (Continuation). DOCUMENTS CONSIDERED TO BE RELEVANT

| Category* | Citation of document, with indication, where appropriate, of the relevant passages | Relevant to claim No. |
|---|---|---|
| Y | JP 3-124337 A (Zexel Corp.), 27 May, 1991 (27.05.91), Full text; all drawings & US 5407116 A1 | 4-20 |
| Y | JP 4-46028 A (Asahi Glass Co., Ltd.), 17 February, 1992 (17.02.92), Full text; all drawings (Family: none) | 9,11-20 |
| Y | JP 10-138035 A (Denso Corp.), 26 May, 1998 (26.05.98), Par. No. [0014]; Fig. 1 & US 6038950 A1 & GB 2319203 A | 11-20 |
| Y | JP 2002-228378 A (Denso Corp.), 14 August, 2002 (14.08.02), Claim 4; Fig. 5 (Family: none) | 12-20 |
| Y | JP 10-197180 A (Denso Corp.), 31 July, 1998 (31.07.98), Full text; all drawings & US 6138354 A1 & GB 2321101 A & DE 19800096 A | 14-20 |
| Y | JP 2001-226730 A (Shinko Arukoa Yuso Kizai Kabushiki Kaisha, Kobe Steel, Ltd.), 21 August, 2001 (21.08.01), Par. No. [0001] (Family: none) | 17-20 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2608802 B
- JP 2198798 A
- JP 2262911 A
- JP 3124337 A
- JP 6063814 A
- JP 7256509 A
- JP 9070711 A
- JP 10138035 A
- JP 11320245 A
- JP 2000210812 A
- JP 2002233913 A
- JP 2002046015 A
- JP 2003011018 A